(19) **Europäisches Patentamt / European Patent Office / Office européen des brevets**

(11) **EP 4 499 492 B1**

(12) **FASCICULE DE BREVET EUROPEEN**

(45) Date de publication et mention de la délivrance du brevet:
**17.06.2026   Bulletin 2026/25**

(21) Numéro de dépôt: **23713112.3**

(22) Date de dépôt: **23.03.2023**

(51) Classification Internationale des Brevets (IPC):
**B62J 50/22** *(2020.01)*   **B62J 17/04** *(2006.01)*
**G02B 27/01** *(2006.01)*   **B60K 35/23** *(2024.01)*

(52) Classification Coopérative des Brevets (CPC):
**B62J 50/22; B60K 35/23; B62J 17/04;**
**B62J 50/225; G02B 27/01; G02B 27/0101;**
B60K 2360/66; B60Y 2200/12; G02B 2027/013;
G02B 2027/015; G02B 2027/0165

(86) Numéro de dépôt international:
**PCT/EP2023/057414**

(87) Numéro de publication internationale:
**WO 2023/180419 (28.09.2023 Gazette 2023/39)**

(54) **DISPOSITIF D'AFFICHAGE TÊTE HAUTE**

HEAD-UP-ANZEIGEVORRICHTUNG

HEAD-UP DISPLAY DEVICE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité:   **24.03.2022   FR 2202639**

(43) Date de publication de la demande:
**05.02.2025   Bulletin 2025/06**

(73) Titulaire: **Eyelights**
**31670 Labège (FR)**

(72) Inventeurs:
• **NAGTEGAELE, Patrice**
**31750 ESCALQUENS (FR)**

• **DUFLOT, Romain**
**31320 CASTANET TOLOSAN (FR)**
• **AILLOUD, Quentin**
**31450 VARENNES (FR)**

(74) Mandataire: **Lavoix**
**2, place d'Estienne d'Orves**
**75441 Paris Cedex 09 (FR)**

(56) Documents cités:
**EP-A1- 3 076 221     JP-A- H0 939 866**
**JP-A- S6 112 450     JP-U- S59 172 086**
**US-A- 5 867 133**

**Description**

La présente invention concerne un dispositif d'affichage tête haute pour un véhicule muni d'un guidon. La présente invention concerne aussi un véhicule associé et un procédé de conception associé.

Les véhicules munis d'un guidon, tels que des motos ou des scooters, sont généralement équipés d'un panneau de contrôle au niveau du guidon du véhicule. Un tel panneau de contrôle, aussi appelé panneau d'instrumentation (en anglais « instrument cluster ») ou tableau de bord, permet de présenter au conducteur les informations utiles à la conduite et au fonctionnement du véhicule. A cet effet, le panneau de contrôle comprend les instruments de bord du véhicule dont certains sont imposés par la législation.

Néanmoins, pour visualiser le panneau de contrôle, le conducteur est amené à quitter la route des yeux, ce qui diminue la vigilance et accroit la fatigue oculaire par l'effort d'accommodation visuelle constamment requis.

Dans le domaine de l'automobile, il est connu d'utiliser des afficheurs tête haute (en anglais « head-up display ») pour permettre la visualisation des informations utiles de manière plus sécuritaire.

Cependant, les véhicules munis d'un guidon, tels que les motos ou les scooters, présentent des contraintes en termes d'espace disponible (particulièrement pour les véhicules de petites cylindrées) et de positionnement du conducteur, avec en outre en fonction des cas un champ de vision restreint par le port d'un casque. Ces contraintes sont incompatibles avec les afficheurs tête haute utilisés pour les automobiles.

Les documents JP S59 172086 U et EP 3 076 221 A portent sur des exemples de dispositifs d'affichage de l'état de la technique. Lesdits documents divulguent un dispositif d'affichage tête haute pour un véhicule muni d'un guidon, tel qu'une moto ou un scooter, comprenant:

a. **un** support propre à être positionné en vis-à-vis du haut du corps d'un conducteur en position de conduite de sorte à défléchir l'air lors de la conduite du véhicule, au moins une portion du support, dite portion utile, étant partiellement réfléchissante et présentant une courbure non nulle de sorte à former **un** miroir concave du côté conducteur,

b. une unité d'émission d'informations de contrôle du véhicule, l'unité d'émission étant propre à émettre au moins **un** faisceau lumineux, l'unité d'émission présentant au moins **un** mode de fonctionnement, dit mode d'affichage tête haute,

l'unité d'émission et le support étant positionnés dans le dispositif d'affichage selon des contraintes de positionnement, les contraintes de positionnement étant telles que, dans le mode d'affichage tête haute, le faisceau lumineux émis par l'unité d'émission est réfléchi sur la portion utile du support de sorte à former une image virtuelle dans le champ de vision du conducteur en position de conduite,

dans lequel le support présente une inclinaison, dite inclinaison principale, par rapport à la verticale, l'unité d'émission étant inclinée relativement au support d'une inclinaison, dite inclinaison relative, les contraintes de positionnement stipulant que l'inclinaison principale et l'inclinaison relative sont telles que le faisceau lumineux émis par l'unité d'émission et réfléchi sur la portion utile forme l'image virtuelle dans le champ de vision du conducteur en position de conduite.

Il existe donc un besoin pour un dispositif compatible avec les contraintes des véhicules munis d'un guidon, permettant de faciliter la visualisation par le conducteur d'informations utiles au contrôle du véhicule de sorte à améliorer la conduite, la sécurité et le maintien de la vigilance du conducteur.

A cet effet, la présente invention a pour objet un dispositif d'affichage selon la revendication 1.

Des modes de réalisation préférés de l'invention sont définis par les revendications dépendantes 2 à 7.

La présente invention concerne aussi un ensemble de conduite selon la revendication 8.

La présente invention concerne aussi un procédé de conception selon la revendication 9.

D'autres caractéristiques et avantages de l'invention apparaîtront à la lecture de la description qui suit de modes de réalisation de l'invention, donnée à titre d'exemple uniquement, et en référence aux dessins qui sont :

- [Fig 1] figure 1, une représentation schématique d'un exemple d'un véhicule muni d'un guidon comprenant un dispositif d'affichage tête haute,
- [Fig 2] figure 2, une représentation schématique d'un exemple d'un dispositif d'affichage tête haute comprenant un support et une unité d'émission d'informations,
- [Fig 3] figure 3, une représentation schématique illustrant un exemple du champ de vision d'un conducteur portant un casque, en particulier du champ de vision direct et du champ de vision périphérique,
- [Fig 4] figure 4, une représentation schématique illustrant un exemple de contraintes de positionnement du support et de l'unité d'émission,
- [Fig 5] figure 5, une représentation schématique d'un autre exemple de dispositif d'affichage tête haute, cet exemple illustrant deux modes de fonctionnement de l'unité d'émission d'informations du dispositif d'affichage, à savoir un mode d'affichage tête haute et un mode d'affichage direct, et
- [Fig 6] figure 6, une représentation schématique d'un autre exemple d'un dispositif d'affichage, le support et l'unité d'émission étant solidaires l'un de l'autre pour former un seul et même bloc.

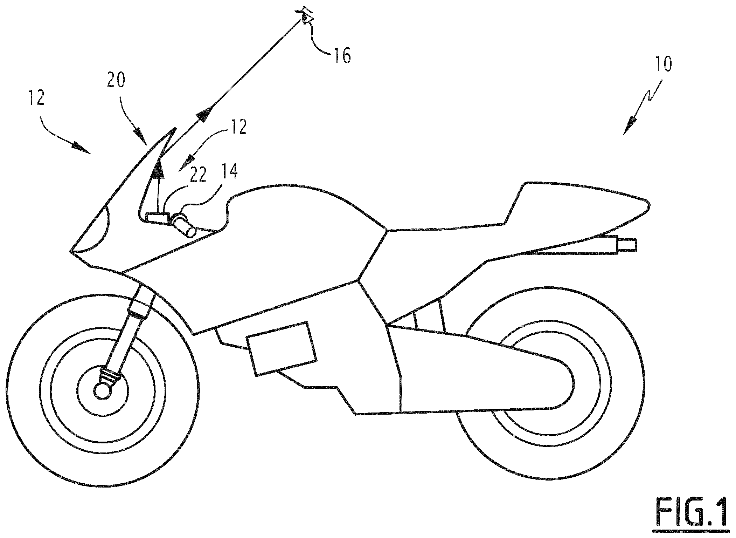

Un véhicule 10 comprenant un dispositif 12 d'affichage tête haute est illustré par la figure 1.

Dans cet exemple, le véhicule 10 est une moto.

En variante, le véhicule 10 est un scooter, un quad, un side-car, un gyropode, un vélomoteur, une motocyclette ou encore une bicyclette, un tricycle ou un triporteur.

De manière plus générale, le véhicule 10 est tout véhicule muni d'un guidon 14. Un guidon est un organe propre à orienter la ou les roues avant du véhicule 10 de sorte à contrôler la trajectoire. Un guidon se différencie, ainsi, du volant d'un véhicule automobile.

Il sera noté qu'au vu des exemples précédents, le véhicule 10 est différent d'un véhicule automobile ou ferroviaire. Un tel véhicule 10 est motorisé ou non et est ou non muni d'une selle. Un tel véhicule 10 présente entre deux et quatre roues.

Le dispositif 12 est propre à afficher des informations de contrôle du véhicule 10 à destination d'un conducteur 16 lors de la conduite du véhicule 10 par le conducteur 16. De telles informations de contrôle sont, par exemple, des informations de navigation, de sécurité ou encore de communication en provenance d'un système embarqué dans le véhicule ou d'un dispositif électronique du conducteur, tel qu'un smartphone.

Le dispositif 12 comprend au moins un mode de fonctionnement permettant l'affichage d'informations dans le champ de vision du conducteur 16 du véhicule 10 lors de la conduite. Les informations sont, par exemple, fournies par des instruments de bord du véhicule 10 ou encore sont des informations de navigation, de sécurité ou de communication provenant d'un système embarqué dans le véhicule ou d'un dispositif électronique du conducteur, tel qu'un smartphone.

A titre d'exemple, les informations sont relatives à un indicateur de vitesse du véhicule 10, à la consommation en énergie du véhicule 10, à des alarmes relatives au dysfonctionnement de certains composants du véhicule 10 ou encore à des informations de navigation (cartographie, positions, directions).

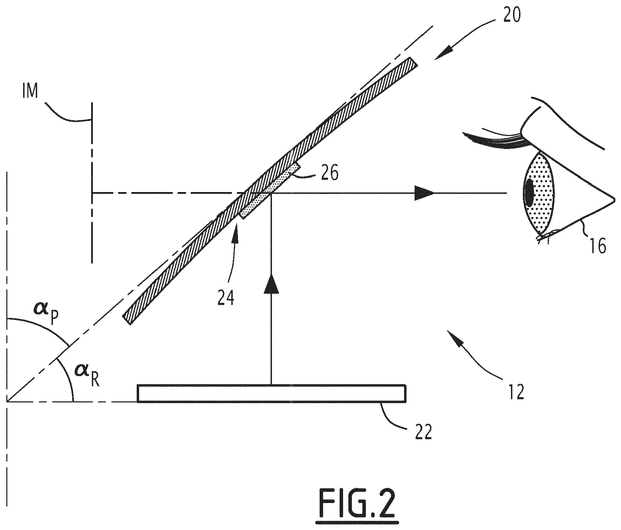

Comme illustré sur la figure 2, le dispositif 12 comprend un support 20 et une unité 22 d'émission d'informations de contrôle du véhicule 10.

Le support 20 est propre à être positionné en vis-à-vis du haut du corps (au moins une partie du buste) du conducteur 16 en position de conduite de sorte à défléchir l'air lors de la conduite du véhicule 10. Le support 20 a ainsi la fonction d'un parebrise. Il est aussi appelé déflecteur ou bulle.

Le support 20 est transparent ou partiellement transparent (teinté en intégralité ou partiellement) ou encore opaque.

Le support 20 est par exemple réalisé en polycarbonate.

Le support 20 présente au moins une portion, dite portion utile 24, qui est partiellement réfléchissante et qui présente une courbure non nulle de sorte à former un miroir concave du côté conducteur. Le miroir concave présente un sommet S, un foyer F et un rayon de courbure R.

Dans un exemple de réalisation, tel qu'illustré par la figure 2, la portion utile 24 est recouverte d'un élément réflecteur 26 conférant la fonction partiellement réfléchissante. L'élément réflecteur 26 est, par exemple, un revêtement ou un traitement (par exemple obtenu par dépôt physique ou dépôt chimique) ou un film (par exemple laminé ou maintenu par effet électrostatique).

En variante, l'élément réflecteur 26 est à l'intérieur de la portion utile 24.

Dans l'exemple de la figure 2, le support 20 présente une courbure non nulle, et la portion utile 24 présente une courbure uniforme avec la courbure du support 20 (mêmes axes de courbure). En variante, la portion utile 24 est une déformation locale du support 20.

Dans l'exemple de la figure 2, la portion utile 24 s'étend sur seulement une portion du support 20, en l'espèce une portion permettant de générer une image virtuelle dans le champ de vision (direct ou périphérique) du conducteur en position de conduite comme cela sera expliqué dans ce qui suit. En variante, la portion utile 24 s'étend sur l'intégralité du support 20.

L'unité d'émission 22 est propre à afficher des informations de contrôle du véhicule 10. Les informations comprennent, de préférence, des informations fournies par des instruments de bord du véhicule 10 ou encore des informations de navigation, de sécurité ou de communication provenant d'un système embarqué dans le véhicule ou d'un dispositif électronique du conducteur, tel qu'un smartphone. A cet effet, l'unité d'émission 22 est propre à émettre au moins un faisceau lumineux.

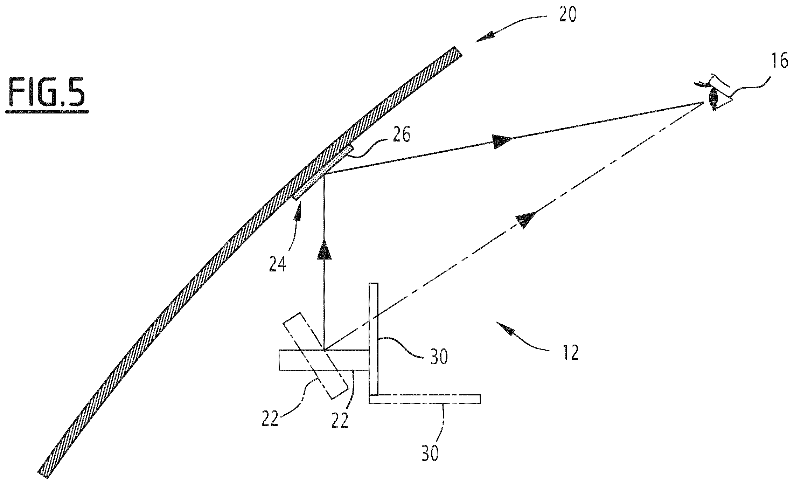

L'unité d'émission 22 présente au moins un mode de fonctionnement, dit mode d'affichage tête haute. De préférence, dans le mode d'affichage tête haute, le dispositif d'affichage tête haute présente un obturateur 30 (visible sur la figure 5) propre à masquer, de la vision directe du conducteur, le faisceau lumineux émis par l'unité d'émission 22. Ainsi, lorsque l'unité d'émission 22 est un écran, dans le mode d'affichage tête haute, l'image affichée sur l'unité d'émission 22 n'est pas visible par le conducteur en vision directe. L'unité d'émission 22 et le support 20 sont positionnés dans le dispositif 12 d'affichage selon des contraintes de positionnement.

Les contraintes de positionnement sont telles que, dans le mode d'affichage tête haute :

- le faisceau lumineux émis par l'unité d'émission 22 est réfléchi sur la portion utile 24 de sorte à former une image virtuelle IM dans le champ de vision du conducteur 16 en position de conduite, et
- l'image virtuelle IM formée est la même image pour l'œil droit et l'œil gauche du conducteur 16.

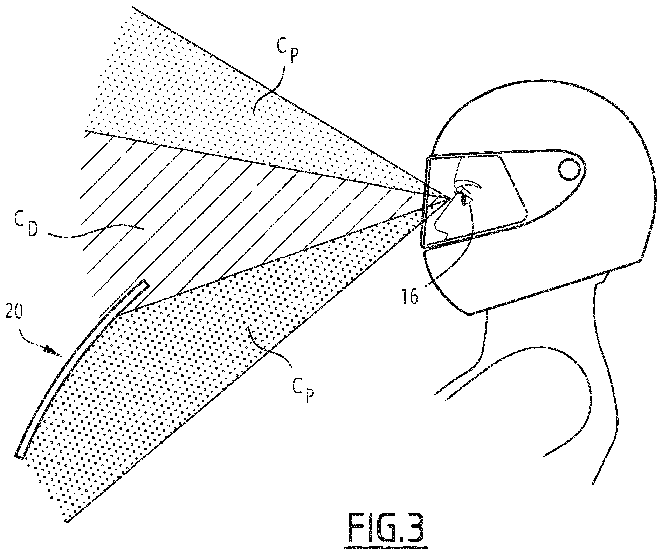

Les contraintes de positionnement permettent ainsi que l'image virtuelle IM formée soit dans le champ de vision du conducteur 16 en position de conduite, et d'éviter le phénomène de double image œil gauche-œil droit. Le champ de vision considéré est de préférence le champ de vision direct $C_D$ (aussi appelé champ de vision central), sinon au moins le champ de vision périphérique $C_P$. Le champ de vision direct $C_D$ est une zone de l'espace (cône de vision) située au centre du champ visuel d'un conducteur. Le champ de vision périphérique $C_P$ est la portion restante du champ visuel du conducteur. La figure 3 illustre à titre d'exemple les différents champs de vision pour un conducteur muni d'un casque, par exemple, un conducteur d'une moto ou d'un scooter.

Les contraintes de positionnement définissent la position absolue du support 20 et la position relative de l'unité d'émission 22 par rapport au support 20.

Dans ce qui suit, comme illustré par la figure 2, il est défini une inclinaison principale $\alpha_P$ comme étant l'inclinaison du support 20 par rapport à la verticale. Il est aussi défini une inclinaison relative $\alpha_R$ comme étant l'inclinaison relative de l'unité d'émission 22 par rapport au support 20.

Selon l'invention, les contraintes de positionnement stipulent que l'inclinaison principale $\alpha_P$ et l'inclinaison relative $\alpha_R$ sont telles que le faisceau lumineux émis par l'unité d'émission 22 et réfléchi sur la portion utile 24 forme une image virtuelle IM dans le champ de vision du conducteur 16 en position de conduite.

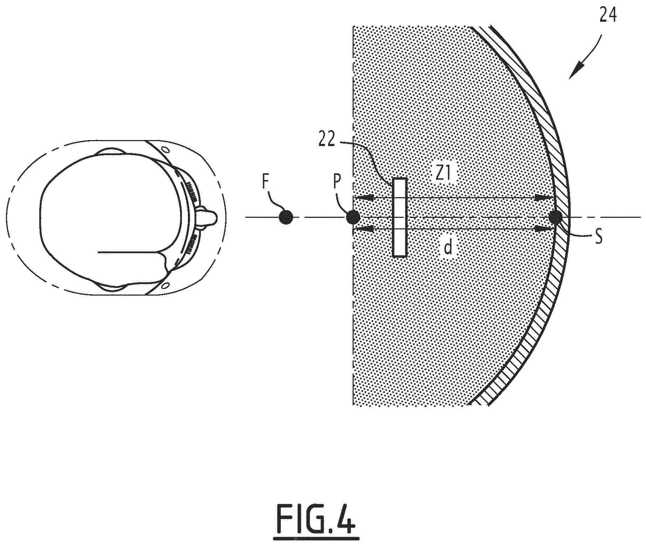

Selon l'invention, comme illustré en figure 4, les contraintes de positionnement stipulent que l'unité d'émission 22 est positionnée côté conducteur 16 dans une zone Z1 entre le sommet S du miroir concave et un point de référence P. Les contraintes de positionnement stipulent que le point de référence P est un point situé entre le sommet S et le foyer F du miroir concave positionné sur la droite reliant le sommet S et le foyer F du miroir concave de sorte que l'image virtuelle IM formée dans le champ de vision du conducteur 16 en position de conduite soit la même image pour l'œil droit et l'œil gauche du conducteur 16. Ainsi, au-delà de cette zone Z1, du fait de la courbure non nulle de la portion utile 24, il sera obtenu une image spécifique à chaque œil, d'où un phénomène de double image.

De préférence, la position du point de référence P dépend du rayon de courbure R du miroir concave.

Avantageusement, les contraintes de positionnement stipulent que la distance entre le point de référence P et le sommet S du miroir concave, dite distance utile d, vérifie la relation suivante :

$$d = -A.R^2 + B.R + C$$

Où :

- d est la distance utile,
- R est le rayon de courbure du miroir concave, et
- A, B et C sont des nombres positifs.

La distance d définit, ainsi, la position maximale à ne pas dépasser afin d'éviter une image différente pour chaque œil. Le dispositif d'affichage est alors positionné entre S et P.

La relation précédente a par exemple été obtenue de manière expérimentale. Dans un exemple de réalisation, le coefficient A est égal à 0,0009, le coefficient B est égal à 0,228 et le coefficient C est égal à 2,7046.

De préférence, le rayon de courbure R du miroir concave est tel que l'image virtuelle IM présente un grossissement strictement supérieur à un, de préférence supérieur ou égal à 1,5.

De préférence, aucune optique n'est disposée entre l'unité d'émission 22 et le support 20.

En complément facultatif, comme illustré par la figure 5, l'unité d'émission 22 présente un autre mode de fonctionnement, dit mode d'affichage direct. Le mode d'affichage direct est tel que les informations émises par l'unité d'émission 22 sont directement lisibles par le conducteur 16 sur l'unité d'émission 22 lorsque le conducteur 16 en position de conduite regarde l'unité d'émission 22. En particulier, dans le mode d'affichage direct, le faisceau lumineux émis par l'unité d'émission 22 n'est pas réfléchi sur la portion utile 24 du miroir concave.

De préférence, comme illustré par la figure 5, le mode d'affichage direct et le mode d'affichage tête haute correspondent à des inclinaisons relatives différentes de l'unité d'émission 22 par rapport au support 20. Notamment, dans le mode d'affichage tête haute, le faisceau lumineux émis par l'unité d'émission 22 est propre à être réfléchi sur la portion utile 24 du support 20 de sorte à former une image virtuelle IM. Dans le mode d'affichage direct, le faisceau lumineux émis par l'unité d'émission 22 est émis en direction du conducteur 16.

En outre, il est à noter que lorsque le dispositif d'affichage 12 comprend un obturateur 30, la position de l'obturateur 30 est modifiée entre le mode d'affichage tête haute et le mode d'affichage direct (donc selon l'inclinaison de l'unité d'émission 22) de sorte que l'image en provenance direct de l'unité d'émission 22 soit masquée au conducteur dans le mode d'affichage tête haute et soit visible par le conducteur dans le mode d'affichage direct.

Ainsi, dans le mode d'affichage direct, l'unité d'émission 22 est assimilable à un tableau de bord pour le véhicule 10. Il pourrait donc même être envisageable de supprimer le tableau de bord du véhicule.

De préférence, le dispositif 12 d'affichage comprend un mécanisme de pivotement, tel qu'un pivot, propre à faire pivoter l'unité d'émission 22 entre le mode d'affichage tête haute et le mode d'affichage direct. Le mécanisme de pivotement est, par exemple, un pivot, une glissière courbe ou correspond à un guidage curviligne, ou encore une cinématique spécifique.

De préférence, le mode d'affichage direct et le mode d'affichage tête haute correspondent aussi à des niveaux différents de luminosité (plus lumineux pour le mode d'affichage tête haute) et à une orientation différente de l'image (réelle) générée par l'unité d'émission 22 (image inversée pour le mode d'affichage tête haute et non inversée pour le mode d'affichage direct).

De préférence, l'unité d'émission 22 est un écran propre à afficher une image réelle à partir de laquelle est émis le faisceau lumineux issu de l'unité d'émission 22. L'écran est, par exemple, un écran à cristaux liquides (en anglais LCD pour « liquid cristal display ») ou un écran OLED (en anglais pour « organic light emitting diode »).

Dans une variante, l'unité d'émission 22 comprend un seul mode de fonctionnement qui est le mode d'affichage tête haute, et l'unité d'émission 22 est fixe relativement au support 20. Dans cette variante, le véhicule 10 comprend généralement un tableau de bord différent du dispositif d'affichage 12 pour l'affichage d'informations en provenance des instruments de bord.

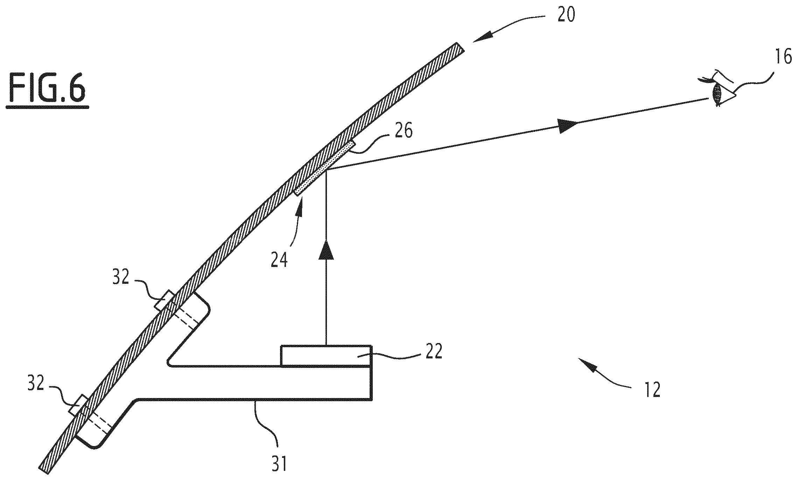

De préférence, comme illustré dans le mode de réalisation de la figure 6, le support 20 et l'unité d'émission 22 forment un seul et même bloc propre à être monté dans le véhicule 10. L'unité d'émission 22 est alors solidaire du support 20. Cela permet de faciliter le montage du dispositif d'affichage 12 sur le véhicule 10.

En particulier, dans l'exemple de la figure 6, le dispositif d'affichage 12 comprend un élément de maintien 31 sur lequel est fixé l'unité d'émission 22. L'élément de maintien 31 lui-même fixé au support 20 par des attaches 32. Un tel dispositif est ainsi destiné à être commercialisé en un seul bloc en tant qu'accessoire pour un véhicule à guidon, et à être ensuite monté par le constructeur ou l'acquéreur dans le véhicule.

Un exemple de procédé de conception d'un dispositif 12 d'affichage tête haute tel que décrit précédemment, va maintenant être décrit.

Le procédé de conception comprend une étape d'obtention de caractéristiques relatives à un conducteur 16 en position de conduite dans le véhicule 10. Les caractéristiques correspondent, par exemple, à un conducteur moyen, par exemple correspondant au 85ème percentile de la population. Les caractéristiques sont, par exemple, la position du conducteur dans le véhicule 10 ou encore la direction du regard du conducteur en position de conduite.

Le procédé de conception comprend une étape de fourniture d'un support 20 propre à être positionné en vis-à-vis du haut du corps d'un conducteur 16 en position de conduite.

Au moins une portion du support 20, dite portion utile 24, est partiellement réfléchissante et présente une courbure non nulle de sorte à former un miroir concave du côté conducteur. La position de la portion utile 24 et la courbure du support 20 ont par exemple été déterminées en fonction des caractéristiques conducteur.

Le procédé de conception comprend une étape de fourniture d'une unité 22 d'émission d'informations de contrôle du véhicule 10. L'unité d'émission 22 est propre à émettre au moins un faisceau lumineux, l'unité d'émission 22 présente au moins un mode de fonctionnement, dit mode d'affichage tête haute.

Le procédé de conception comprend une étape de positionnement du support 20 et de l'unité d'émission 22 dans le dispositif 12 d'affichage selon des contraintes de positionnement. Les contraintes de positionnement sont telles que, dans le mode d'affichage tête haute, le faisceau lumineux émis par l'unité d'émission 22 est réfléchi sur la portion utile 24 de sorte à former une image virtuelle IM dans le champ de vision du conducteur 16 en position de conduite, l'image virtuelle IM formée étant la même image pour l'œil droit et l'œil gauche du conducteur 16.

Les contraintes de positionnement sont telles que décrites précédemment dans la description.

La position du support 20 est d'abord déterminée par rapport à la verticale. L'inclinaison relative $\alpha_R$ de l'unité d'émission 22 par rapport au support 20 est ensuite déterminée de sorte que l'image virtuelle IM soit bien formée dans le champ de vision du conducteur 16 en position de conduite. La zone dans laquelle positionner l'unité d'émission 22 par rapport au support 20 est également déterminée comme décrit précédemment en fonction de la courbure de la portion utile 24 de sorte que l'image virtuelle IM formée soit la même image pour l'œil droit et l'œil gauche du conducteur 16.

Ainsi, le dispositif 12 d'affichage tête haute permet l'affichage d'informations utiles à la conduite (informations de contrôle, de navigation, de conditions de circulation) dans le champ de vision d'un conducteur 16 en position de conduite, ce qui facilite l'accès à ces informations par le conducteur.

En particulier, la courbure non nulle de la partie utile 24 permet de grossir les informations en provenance de l'unité d'émission 22, ce qui permet de s'affranchir d'une unité d'émission 22 trop volumineuse pour un véhicule à guidon. En outre, une telle courbure contribue à réduire les vibrations (d'/autant plus lorsqu'elle s'étend sur l'intégralité du support 20) qui sont généralement plus importantes pour les véhicules à guidon que les véhicules automobiles.

Les contraintes de positionnement permettent notamment que malgré la courbure de la portion utile 24, l'image virtuelle IM générée soit la même pour chacun des deux yeux du conducteur 16, et éviter ainsi les désagréments liés à une double image.

L'homme du métier comprendra que les modes de réalisation décrits précédemment sont susceptibles d'être combinés entre eux lorsque de telles combinaisons sont compatibles.

**Revendications**

1. Dispositif (12) d'affichage tête haute pour un véhicule (10) muni d'un guidon (14), tel qu'une moto ou un scooter, comprenant :

   a. un support (20) propre à être positionné en vis-à-vis du haut du corps d'un conducteur (16) en position de conduite de sorte à défléchir l'air lors de la conduite du véhicule (10), au moins une portion du support (20), dite portion utile (24), étant partiellement réfléchissante et présentant une courbure non nulle de sorte à former un miroir concave du côté conducteur (16),

b. une unité (22) d'émission d'informations de contrôle du véhicule (10), l'unité d'émission (22) étant propre à émettre au moins un faisceau lumineux, l'unité d'émission (22) présentant au moins un mode de fonctionnement, dit mode d'affichage tête haute,

l'unité d'émission (22) et le support (20) étant positionnés dans le dispositif d'affichage selon des contraintes de positionnement, les contraintes de positionnement étant telles que, dans le mode d'affichage tête haute :

- le faisceau lumineux émis par l'unité d'émission (22) est réfléchi sur la portion utile (24) du support (20) de sorte à former une image virtuelle (IM) dans le champ de vision du conducteur (16) en position de conduite, et

- l'image virtuelle (IM) formée est la même image pour l'œil droit et l'œil gauche du conducteur (16),

dans lequel le support (20) présente une inclinaison, dite inclinaison principale ($\alpha_P$), par rapport à la verticale, l'unité d'émission (22) étant inclinée relativement au support (20) d'une inclinaison, dite inclinaison relative ($\alpha_R$), les contraintes de positionnement stipulant que l'inclinaison principale ($\alpha_P$) et l'inclinaison relative ($\alpha_R$) sont telles que le faisceau lumineux émis par l'unité d'émission (22) et réfléchi sur la portion utile (24) forme l'image virtuelle (IM) dans le champ de vision du conducteur (16) en position de conduite,

dans lequel le miroir concave présente un sommet (S) et un foyer (F), les contraintes de positionnement stipulant que l'unité d'émission (22) est positionnée côté conducteur dans une zone entre le sommet (S) du miroir concave et un point de référence (P), les contraintes de positionnement stipulant que le point de référence (P) est un point situé entre le sommet (S) et le foyer (F) du miroir concave positionné sur la droite reliant le sommet (S) et le foyer (F) du miroir concave de sorte que l'image virtuelle (IM) formée dans le champ de vision du conducteur (16) en position de conduite soit la même image pour l'œil droit et l'œil gauche du conducteur (16).

**2.** Dispositif (12) selon la revendication 1, dans lequel le miroir concave présente un rayon de courbure R, la position du point de référence (P) dépendant du rayon de courbure R du miroir concave.

**3.** Dispositif (12) selon la revendication 2, dans lequel la distance entre le point de référence (P) et le sommet (S) du miroir concave est dite distance utile (d), les contraintes de positionnement stipulant que la distance utile (d) vérifie la relation suivante :

$$d = -A.R^2 + B.R + C$$

Où :

- d est la distance utile,
- R est le rayon de courbure du miroir concave, et
- A, B et C sont des nombres positifs.

**4.** Dispositif (12) selon l'une quelconque des revendications 2 à 3, dans lequel le rayon de courbure R est tel que l'image virtuelle (IM) présente un grossissement strictement supérieur à un.

**5.** Dispositif (12) selon l'une quelconque des revendications 1 à 4, dans lequel l'unité d'émission (22) présente un autre mode de fonctionnement, dit mode d'affichage direct, tel que les informations émises par l'unité d'émission (22) sont directement lisibles par le conducteur (16) sur l'unité d'émission (22) lorsque le conducteur (16) en position de conduite regarde l'unité d'émission (22).

**6.** Dispositif (12) selon la revendication 5, dans lequel le mode d'affichage direct et le mode d'affichage tête haute correspondent à des inclinaisons relatives différentes de l'unité d'émission (22) par rapport au support (20).

**7.** Dispositif (12) selon la revendication 6, dans lequel le dispositif (12) d'affichage comprend un mécanisme de pivotement propre à faire pivoter l'unité d'émission (22) entre le mode d'affichage tête haute et le mode d'affichage direct.

**8.** Ensemble de conduite comprenant :

a. un véhicule (10) muni d'un guidon (14), tel qu'une moto ou un scooter, et

b. un dispositif (12) d'affichage selon l'une quelconque des revendications 1 à 7, le dispositif (12) d'affichage étant intégré au véhicule (10) de sorte à être positionné en vis-à-vis du haut du corps du conducteur (16) en position de conduite pour déflecter l'air lors de la conduite du véhicule (10) et permettre l'affichage d'informations de contrôle du véhicule (10) par la formation de l'image virtuelle (IM) dans le champ de vision du conducteur (16) en position de conduite, l'image virtuelle (IM) formée étant la même image pour l'œil droit et l'œil gauche du conducteur (16).

9. Procédé de conception d'un dispositif (12) d'affichage tête haute selon l'une quelconque

   des revendications 1 à 7 pour un véhicule (10) muni d'un guidon (14), tel qu'une moto ou un scooter, le procédé comprenant les étapes suivantes :

   a. l'obtention de caractéristiques conducteur relatives à un conducteur (16) en position de conduite dans le véhicule (10),
   b. la fourniture d'un support (20) propre à être positionné en vis-à-vis du haut du corps du conducteur (16) en position de conduite, au moins une portion du support (20), dite portion utile (24), étant partiellement réfléchissante et présentant une courbure non nulle de sorte à former un miroir concave du côté conducteur, la courbure du support (20) ayant été déterminée en fonction des caractéristiques conducteur,
   c. la fourniture d'une unité (22) d'émission d'informations de contrôle du véhicule (10), l'unité d'émission (22) étant propre à émettre au moins un faisceau lumineux, l'unité d'émission (22) présentant au moins un mode de fonctionnement, dit mode d'affichage tête haute, et
   d. le positionnement du support (20) et de l'unité d'émission (22) dans le dispositif (12) d'affichage selon des contraintes de positionnement, les contraintes de positionnement étant telles que, dans le mode d'affichage tête haute, le faisceau lumineux émis par l'unité d'émission (22) est réfléchi sur la portion utile (24) de sorte à former une image virtuelle (IM) dans le champ de vision du conducteur (16) en position de conduite, l'image virtuelle (IM) formée étant la même image pour l'œil droit et l'œil gauche du conducteur (16),

   dans lequel le support (20) présente une inclinaison, dite inclinaison principale ($\alpha_P$), par rapport à la verticale, l'unité d'émission (22) étant inclinée relativement au support (20) d'une inclinaison, dite inclinaison relative ($\alpha_R$), les contraintes de positionnement stipulant que l'inclinaison principale ($\alpha_P$) et l'inclinaison relative ($\alpha_R$) sont telles que le faisceau lumineux émis par l'unité d'émission (22) et réfléchi sur la portion utile (24) forme l'image virtuelle (IM) dans le champ de vision du conducteur (16) en position de conduite,
   dans lequel le miroir concave présente un sommet (S) et un foyer (F), les contraintes de positionnement stipulant que l'unité d'émission (22) est positionnée côté conducteur dans une zone entre le sommet (S) du miroir concave et un point de référence (P), les contraintes de positionnement stipulant que le point de référence (P) est un point situé entre le sommet (S) et le foyer (F) du miroir concave positionné sur la droite reliant le sommet (S) et le foyer (F) du miroir concave de sorte que l'image virtuelle (IM) formée dans le champ de vision du conducteur (16) en position de conduite soit la même image pour l'œil droit et l'œil gauche du conducteur (16).

**Patentansprüche**

1. Head-up-Anzeigevorrichtung (12) für ein Fahrzeug (10), das mit einem Lenker (14) versehen ist, wie beispielsweise ein Motorrad oder ein Roller, umfassend:

   a. einen Träger (20), der geeignet ist, gegenüber dem Oberkörper eines Fahrers (16) in Fahrposition positioniert zu sein, um die Luft beim Fahren des Fahrzeugs (10) abzulenken, wobei mindestens ein Abschnitt des Trägers (20), der sogenannte Nutzabschnitt (24), teilweise reflektierend ist und eine Krümmung ungleich null aufweist, sodass auf der Fahrerseite (16) ein konkaver Spiegel gebildet ist,
   b. eine Emissionseinheit (22) von Steuerungsinformationen des Fahrzeugs (10), wobei die Emissionseinheit (22) geeignet ist, mindestens einen Lichtstrahl auszusenden, wobei die Emissionseinheit (22) mindestens einen Betriebsmodus, den sogenannten Head-up-Anzeigemodus, aufweist,
   wobei die Emissionseinheit (22) und der Träger (20) in der Anzeigevorrichtung gemäß Positionierungsvorgaben positioniert sind, wobei die Positionierungsvorgaben derart sind, dass in dem Head-up-Anzeigemodus:

   - der von der Emissionseinheit (22) emittierte Lichtstrahl auf dem Nutzabschnitt (24) des Trägers (20) reflektiert wird, um ein virtuelles Bild (IM) im Sichtfeld des Fahrers (16) in der Fahrposition zu bilden, und
   - das erzeugte virtuelle Bild (IM) dasselbe Bild für das rechte und das linke Auge des Fahrers (16) ist,

   wobei der Träger (20) eine Neigung, die sogenannte Hauptneigung ($\alpha_P$), in Bezug auf die Vertikale aufweist, die Emissionseinheit (22) in Bezug auf den Träger (20) um eine Neigung, die

sogenannte relative Neigung ($\alpha_R$), geneigt ist, die Positionierungsvorgaben besagen, dass die Hauptneigung ($\alpha_P$) und die relative Neigung ($\alpha_R$) derart sind, dass der von der Sendeeinheit (22) emittierte und am Nutzabschitt (24) reflektierte Lichtstrahl das virtuelle Bild (IM) im Sichtfeld des Fahrers (16) in Fahrposition bildet, wobei der konkave Spiegel einen Scheitelpunkt (S) und einen Brennpunkt (F) aufweist, wobei die Positionierungsvorgaben besagen, dass die Emissionseinheit (22) auf der Fahrerseite in einem Bereich zwischen dem Scheitelpunkt (S) des konkaven Spiegels und einem Referenzpunkt (P) positioniert ist, die Positionierungsvorgaben besagen, dass der Referenzpunkt (P) ein Punkt zwischen dem Scheitelpunkt (S) und dem Brennpunkt (F) des konkaven Spiegels ist, der auf der Geraden positioniert ist, die den Scheitelpunkt (S) und den Brennpunkt (F) des konkaven Spiegels verbindet, sodass das virtuelle Bild (IM), das im Sichtfeld des Fahrers (16) in Fahrposition gebildet wird, dasselbe Bild für das rechte und das linke Auge des Fahrers (16) ist.

2. Vorrichtung (12) nach Anspruch 1, wobei der konkave Spiegel einen Krümmungsradius aufweist, wobei die Position des Referenzpunkts (P) von dem Krümmungsradius R des konkaven Spiegels abhängt.

3. Vorrichtung (12) nach Anspruch 2, wobei der Abstand zwischen dem Referenzpunkt (P) und dem Scheitelpunkt (S) des konkaven Spiegels als Nutzabstand (d) bezeichnet wird, wobei die Positionierungsvorgaben besagen, dass der Nutzabstand (d) die folgende Beziehung erfüllt:

$$d = -A.R^2 + B.R + C$$

wobei:

- d der Nutzabstand ist,
- R der Krümmungsradius des konkaven Spiegels ist, und
- A, B und C positive Zahlen sind.

4. Vorrichtung (12) nach einem der Ansprüche bis 3, wobei der Krümmungsradius R derart ist, dass das virtuelle Bild (IM) eine Vergrößerung aufweist, die strikt größer als eins ist.

5. Vorrichtung (12) nach einem der Ansprüche 1 bis 4, wobei die Emissionseinheit (22) eine weitere Betriebsart, den sogenannten Direktanzeigemodus, aufweist, der es ermöglicht, dass die von der Emissionseinheit (22) emittierten Informationen für den Fahrer (16) direkt auf der Emissionseinheit (22) ablesbar sind, wenn der Fahrer (16) in Fahrposition die Emissionseinheit (22) betrachtet.

6. Vorrichtung (12) nach Anspruch 5, wobei der Direktanzeigemodus und der Head-up-Anzeigemodus unterschiedlichen relativen Neigungen der Emissionseinheit (22) in Bezug auf die Träger (20) entsprechen.

7. Vorrichtung (12) nach Anspruch 6, wobei die Anzeigevorrichtung (12) einen Schwenkmechanismus umfasst, der geeignet ist, um die Emissionseinheit (22) zwischen dem Head-up-Anzeigemodus und dem Direktanzeigemodus zu schwenken.

8. Fahranordnung, umfassend:

a. ein Fahrzeug (10), das mit einem Lenker (14) versehen ist, wie beispielsweise ein Motorrad oder ein Roller, und
b. eine Anzeigevorrichtung (12) nach einem der Ansprüche 1 bis 7, wobei die Anzeigevorrichtung (12) in das Fahrzeug (10) integriert ist, um gegenüber dem Oberkörper des Fahrers (16) in Fahrposition positioniert zu sein, um die Luft beim Fahren des Fahrzeugs (10) abzulenken und die Anzeige von Steuerungsinformationen des Fahrzeugs (10) durch Bilden des virtuellen Bilds (IM) im Sichtfeld des Fahrers (16) in Fahrposition zu ermöglichen, wobei das gebildete virtuelle Bild (IM) dasselbe Bild für das rechte und das linke Auge des Fahrers (16) ist.

9. Entwurfsverfahren einer Head-up-Anzeigevorrichtung (12) nach einem der Ansprüche 1 bis 7 für ein Fahrzeug (10), das mit einem Lenker (14) versehen ist, wie beispielsweise ein Motorrad oder ein Roller, das Verfahren umfassend die folgenden Schritte:

a. Erlangen von Fahrermerkmalen in Bezug auf einen Fahrer (16) in Fahrposition in dem Fahrzeug (10),
b. Bereitstellung eines Trägers (20), der geeignet ist, um in Fahrposition gegenüber dem Oberkörper des Fahrers (16) positioniert zu sein, wobei mindestens ein Abschnitt des Trägers (20), der sogenannte Nutzabschnitt (24), teilweise reflektierend ist und eine Krümmung ungleich null aufweist, sodass auf der Fahrerseite ein konkaver Spiegel gebildet ist, wobei die Krümmung des Trägers (20) abhängig von den Fahrermerkmalen bestimmt wurde,
c. Bereitstellen einer Emissionseinheit (22) von Steuerungsinformationen des Fahrzeugs (10), wobei die Emissionseinheit (22) geeignet ist, mindestens einen Lichtstrahl auszusenden, wobei die Emissionseinheit (22) mindestens einen Betriebsmodus, den sogenannten Head-up-Anzeigemodus, aufweist, und

d. Positionieren des Trägers (20) und der Emissionseinheit (22) in der Anzeigevorrichtung (12) gemäß Positionierungsvorgaben, wobei die Positionierungsvorgaben derart sind, dass in dem Head-up-Anzeigemodus der von der Emissionseinheit (22) emittierte Lichtstrahl an dem Nutzabschnitt (24) reflektiert wird, um ein virtuelles Bild (IM) im Sichtfeld des Fahrers (16) in der Fahrposition zu bilden, wobei das gebildete virtuelle Bild (IM) das gleiche Bild für das rechte und das linke Auge des Fahrers (16) ist, wobei der Träger (20) eine Neigung, die sogenannte Hauptneigung ($\alpha_P$), in Bezug auf die Vertikale aufweist, die Emissionseinheit (22) in Bezug auf den Träger (20) um eine Neigung, die sogenannte relative Neigung ($\alpha_R$), geneigt ist, die Positionierungsvorgaben besagen, dass die Hauptneigung ($\alpha_P$) und die relative Neigung ($\alpha_R$) derart sind, dass der von der Sendeeinheit (22) emittierte und am Nutzabschitt (24) reflektierte Lichtstrahl das virtuelle Bild (IM) im Sichtfeld des Fahrers (16) in Fahrposition bildet, wobei der konkave Spiegel einen Scheitelpunkt (S) und einen Brennpunkt (F) aufweist, wobei die Positionierungsvorgaben besagen, dass die Emissionseinheit (22) auf der Fahrerseite in einem Bereich zwischen dem Scheitelpunkt (S) des konkaven Spiegels und einem Referenzpunkt (P) positioniert ist, die Positionierungsvorgaben besagen, dass der Referenzpunkt (P) ein Punkt zwischen dem Scheitelpunkt (S) und dem Brennpunkt (F) des konkaven Spiegels ist, der auf der Geraden positioniert ist, die den Scheitelpunkt (S) und den Brennpunkt (F) des konkaven Spiegels verbindet, sodass das virtuelle Bild (IM), das im Sichtfeld des Fahrers (16) in Fahrposition gebildet wird, dasselbe Bild für das rechte und das linke Auge des Fahrers (16) ist.

**Claims**

1. A head-up display device (12) for a vehicle (10) with a handlebar (14), such as a motorcycle or a scooter, comprising:

   a. a support (20) suitable for being positioned opposite the upper part of the body of a rider (16) in the driving position so as to deflect the air when driving the vehicle (10), at least a portion of the support (20), called the useful portion (24), being partially reflective and having a non-zero curvature so as to form a concave mirror on the rider's side (16),

   b. an emission unit (22) for control information of the vehicle (10), the emission unit (22) being apt to emit at least one light beam, the emission unit (22) having at least one operating mode, called the head-up display mode,

   the emission unit (22) and the support (20) being positioned in the display device according to positioning constraints, the positioning constraints being such that, in the head-up display mode:

   - the light beam emitted by the emission unit (22) is reflected onto the useful portion (24) of the support (20) so as to form a virtual image (IM) in the field of vision of the rider (16) in the driving position, and
   - the virtual image (IM) formed is the same image for the right eye and the left eye of the rider (16),

   wherein the support (20) has an inclination, called the main inclination ($\alpha_P$), with respect to the vertical, the emission unit (22) being inclined relative to the support (20) by an inclination, called the relative inclination ($\alpha_R$), the positioning constraints stipulating that the main inclination ($\alpha_P$) and the relative inclination ($\alpha_R$) are such that the light beam emitted by the emission unit (22) and reflected onto the useful portion (24) forms the virtual image (IM) in the field of vision of the rider (16) in the driving position, wherein the concave mirror has an apex (S) and a focus (F), the positioning constraints stipulating that the emission unit (22) is positioned on the rider side in a zone between the apex (S) of the concave mirror and a reference point (P), the positioning constraints stipulating that the reference point (P) is a point located between the vertex (S) and the focus (F) of the concave mirror positioned on the straight line connecting the vertex (S) and the focus (F) of the concave mirror so that the virtual image (IM) formed in the field of vision of the rider (16) in the driving position is the same image for the right eye and left eye of the rider (16).

2. The device (12) according to claim 1, wherein the concave mirror has a radius of curvature R, the position of the reference point (P) depending on the radius of curvature R of the concave mirror.

3. The device (12) according to claim 2, wherein the distance between the reference point (P) and the vertex (S) of the concave mirror is called useful distance (d), the positioning constraints stipulating that the useful distance (d) satisfies the following relation:

$$d = -A.R^2 + B.R + C$$

Where:

- d is the useful distance,
- R is the radius of curvature of the concave mirror, and
- A, B and C are positive numbers.

4. The device (12) according to any of claims 2 to 3, wherein the radius of curvature R is such that the virtual image (IM) has a magnification strictly greater than one.

5. The device (12) according to any of claims 1 to 4, wherein the emission unit (22) has another mode of operation, called the direct display mode, such that the information emitted by the emission unit (22) is directly readable by the rider (16) on the emission unit (22) when the rider (16) in the driving position is looking at the emission unit (22).

6. The device (12) according to claim 5, wherein the direct display mode and the head-up display mode correspond to different relative inclinations of the emission unit (22) relative to the support (20).

7. The device (12) according to claim 6, wherein the display device (12) comprises a pivoting mechanism apt to pivot the emission unit (22) between the head-up display mode and the direct display mode.

8. A driving assembly comprising:

   a. a vehicle (10) with a handlebar (14), such as a motorcycle or scooter, and
   b. a display device (12) according to any of claims 1 to 7, the display device (12) being integrated into the vehicle (10) so as to be positioned opposite the upper part of the body of the rider (16) in the driving position to deflect air during the driving of the vehicle (10) and to display control information of the vehicle (10) by forming the virtual image (IM) in the field of vision of the rider (16) in the driving position, the virtual image (IM) formed being the same image for the right eye and the left eye of the rider (16).

9. A method of designing a head-up display device (12) according to any of claims 1 to 7 for a vehicle (10) with a handlebar (14), such as a motorbike or a scooter, the method comprising the following steps:

   a. obtaining the rider features relating to a rider (16) in the driving position in the vehicle (10),
   b. supplying a support (20) suitable for being positioned opposite the upper part of the body of the rider (16) in the driving position, at least a portion of the support (20), called the useful portion (24), being partially reflective and having a non-zero curvature so as to form a concave mirror on the rider's side, the curvature of the support (20) having been determined according to the rider's features,

c. supplying an emission unit (22) for the control information of the vehicle (10), the emission unit (22) being apt to emit at least one light beam, the emission unit (22) having at least one operating mode, called the head-up display mode, and

d. positioning the support (20) and the emission unit (22) in the display device (12) according to positioning constraints, the positioning constraints being such that, in the head-up display mode, the light beam emitted by the emission unit (22) is reflected onto the useful portion (24) in such a way that a virtual image (IM) is formed in the field of vision of the rider (16) in the driving position, the virtual image (IM) formed is the same image for the right eye and the left eye of the rider (16),

wherein the support (20) has an inclination, called the main inclination ($\alpha_P$), with respect to the vertical, the emission unit (22) being inclined relative to the support (20) by an inclination, called the relative inclination ($\alpha_R$), the positioning constraints stipulating that the main inclination ($\alpha_P$) and the relative inclination ($\alpha_R$) are such that the light beam emitted by the emission unit (22) and reflected onto the useful portion (24) forms the virtual image (IM) in the field of vision of the rider (16) in the driving position,

wherein the concave mirror has an apex (S) and a focus (F), the positioning constraints stipulating that the emission unit (22) is positioned on the rider side in a zone between the apex (S) of the concave mirror and a reference point (P), the positioning constraints stipulating that the reference point (P) is a point located between the vertex (S) and the focus (F) of the concave mirror positioned on the straight line connecting the vertex (S) and the focus (F) of the concave mirror so that the virtual image (IM) formed in the field of vision of the rider (16) in the driving position is the same image for the right eye and left eye of the rider (16).

FIG.1

FIG.2

FIG.3

## FIG.4

FIG.5

FIG.6

**EP 4 499 492 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP S59172086 U

- EP 3076221 A